# EUROPEAN PATENT APPLICATION

(11) **EP 3 933 811 A1**
(43) Date of publication of application: **05.01.2022**
(21) Application number: 21180019.8
(22) Date of filing: 17.06.2021
(51) Int. Cl.: G09B 7/00, G09B 7/07

(54) **DYNAMICALLY ADAPTING CYBERSECURITY TRAINING TEMPLATES BASED ON MEASURING USER-SPECIFIC PHISHING/FRAUD SUSCEPTIBILITY**

(30) Priority: 02.07.2020 US 202063047303 P; 03.03.2021 US 202117191034
(71) Applicant: Proofpoint, Inc., Sunnyvale, CA 94085 (US)
(72) Inventor: van Nelson, Andrew, Sunnyvale, CA 94085 (US); Vuong, Annalies Ziem, Sunnyvale, CA 94085 (US); Fisher, Renee, Sunnyvale, CA 94085 (US)
(74) Representative: Käck, Stefan

(57) **Abstract**

Aspects of the disclosure relate to measuring user-specific fraud-susceptibility behavioral scores and dynamically generating customized cybersecurity training modules using fraud-susceptibility behavioral scores. A computing platform may generate (705) a fraud-susceptibility personality survey and send (710) the fraud-susceptibility personality survey to an enterprise user device. Subsequently, the computing platform may receive (715) information indicating how a user of the enterprise user device responded to the fraud-susceptibility personality survey, calculate (720) a fraud-susceptibility behavioral psychology score for the user based on the user information, and identify (725) a user-specific predicted failure rate on one or more cybersecurity training modules based on the fraud-susceptibility behavioral psychology score. Based on the user-specific predicted failure rate and using a behavioral psychology training module, the computing platform may generate (730), and send (735) to the enterprise user device, a dynamically adapted cybersecurity training template, which causes the enterprise user device to display (740) one or more customized cybersecurity training modules.

## Description

### TECHNICAL FIELD

Aspects of the disclosure relate to digital data processing systems, data processing methods, machine learning systems, and communication systems and networks. In particular, one or more aspects of the disclosure relate to measuring user-specific fraud-susceptibility behavioral scores and dynamically generating customized cybersecurity training modules using such fraud-susceptibility behavioral scores.

### BACKGROUND

Increasingly, organizations face various cybersecurity threats through electronic communications. Various methods of message analysis have been developed to combat these threats. Various methods have been developed to combat these threats, including training enterprise users (e.g., employees of the enterprise organization) to understand cybersecurity risks and recognize cybersecurity threats. In many instances, however, it may be difficult to train users to recognize and avoid cybersecurity threats in electronic communications. This problem may be particularly complex for large enterprise organizations with large user bases that have a wide range of skill sets and backgrounds. These issues are further compounded when trying to balance and optimize the providing of user training and the ensuring of network security with the consumption of computing resources, such as the processing power and network bandwidth that may be required to deliver such training and provide such security.

### SUMMARY

Aspects of the disclosure provide technical solutions that overcome one or more of the technical problems described above and/or other technical challenges. For instance, one or more aspects of the disclosure relate to measuring user-specific fraud-susceptibility behavioral scores and dynamically generating customized cybersecurity training modules using such fraud-susceptibility behavioral scores.

The invention is defined in the appended independent claims. Particular embodiments are set out in the dependent claims.

In accordance with one or more embodiments, a computing platform having at least one processor, a communication interface, and memory may generate a fraud-susceptibility personality survey. The computing platform may then send, to an enterprise user device, the fraud-susceptibility personality survey. Thereafter, the computing platform may receive, from the enterprise user device, information indicating how a user of the enterprise user device responded to the fraud-susceptibility personality survey. Subsequently, the computing platform may calculate a fraud-susceptibility behavioral psychology score for the user based on the user information, and identify a user-specific predicted failure rate on one or more cybersecurity training modules based on the fraud-susceptibility behavioral psychology score. The computing platform may generate, based on the user-specific predicted failure rate and using a behavioral psychology training module, a dynamically adapted cybersecurity training template. The computing platform may then send, to the enterprise user device, the dynamically adapted cybersecurity training template. Sending the dynamically adapted cybersecurity training template to the enterprise user device may cause the enterprise user device to display the one or more customized cybersecurity training modules.

In some embodiments, generating the fraud-susceptibility personality survey may include customizing one or more portions of the fraud-susceptibility personality survey based on at least one of: user information or enterprise information.

In some embodiments, the fraud-susceptibility personality survey may include a general decision-making portion. Calculating the fraud-susceptibility behavioral psychology score may include weighting the general decision-making portion more than one or more other portions of the fraud-susceptibility personality survey. In some aspects, generating the fraud-susceptibility personality survey may include dynamically adapting one or more portions of the fraud-susceptibility personality survey as the user responds to the general decision-making portion of the fraud-susceptibility personality survey.

In some embodiments, sending the fraud-susceptibility personality survey may include generating and sending one or more graphical user interfaces or web portal pages to the enterprise user device. The fraud-susceptibility personality survey may include a plurality of questions, and calculating the fraud-susceptibility behavioral psychology score may include adding a plurality of sub-scores, such that different potential responses to each of the plurality of questions are associated with different sub-scores.

In some embodiments, the memory may store additional computer-readable instructions that, when executed by the at least one processor, cause the computing platform to provide, to an enterprise administrator device, a collective fraud-susceptibility behavioral psychology score for a group of users associated with an enterprise organization. The memory may store further additional computer-readable instructions that, when executed by the at least one processor, cause the computing platform to provide, to the enterprise administrator device, one or more tailored cybersecurity training recommendation options based on the collective fraud-susceptibility behavioral psychology score.

In some embodiments, the memory may store additional computer-readable instructions that, when executed by the at least one processor, cause the computing platform to prior to generating the dynamically adapted cybersecurity training template, generate a training nudge for the user to complete the one or more customized cybersecurity training modules, and send the training nudge to the enterprise user device. In some aspects, generating the training nudge may include customizing one or more aspects of the training nudge using the behavioral psychology training module.

In some embodiments, generating the dynamically adapted cybersecurity training template may include selecting and inserting one or more modular cybersecurity training elements maintained by a cybersecurity training library into a cybersecurity training template. The memory may store additional computer-readable instructions that, when executed by the at least one processor, cause the computing platform to receive training program results based on user interaction with the one or more customized cybersecurity training modules. In some examples, the memory may store additional computer-readable instructions that, when executed by the at least one processor, cause the computing platform to update a machine learning model used to generate the dynamically adapted cybersecurity training template based on training program results.

In accordance with one or more additional or alternative embodiments, a method may be provided at a computing platform having at least one processor, a communication interface, and memory. The method may include generating a fraud-susceptibility personality survey, sending, to an enterprise user device, the fraud-susceptibility personality survey, receiving, from the enterprise user device, information indicating how a user of the enterprise user device responded to the fraud-susceptibility personality survey, calculating a fraud-susceptibility behavioral psychology score for the user based on the user information, identifying a user-specific predicted failure rate on one or more cybersecurity training modules based on the fraud-susceptibility behavioral psychology score, generating, based on the user-specific predicted failure rate and using a behavioral psychology training module, a dynamically adapted cybersecurity training template, and sending, to the enterprise user device, the dynamically adapted cybersecurity training template, wherein sending the dynamically adapted cybersecurity training template to the enterprise user device causes the enterprise user device to display the one or more customized cybersecurity training modules.

In some embodiments, generating the fraud-susceptibility personality survey may include customizing one or more portions of the fraud-susceptibility personality survey based on at least one of: user information or enterprise information.

In some embodiments, the fraud-susceptibility personality survey may include a general decision-making portion, and calculating the fraud-susceptibility behavioral psychology score may include weighting the general decision-making portion more than one or more other portions of the fraud-susceptibility personality survey. In some aspects, generating the fraud-susceptibility personality survey may include dynamically adapting one or more portions of the fraud-susceptibility personality survey as the user responds to the general decision-making portion of the fraud-susceptibility personality survey.

In some embodiments, the fraud-susceptibility personality survey may include a plurality of questions, and calculating the fraud-susceptibility behavioral psychology score may include adding a plurality of sub-scores, such that different potential responses to each of the plurality of questions are associated with different sub-scores.

In some embodiments, the method may further include generating a training nudge for the user to complete the one or more customized cybersecurity training modules prior to generating the dynamically adapted cybersecurity training template, and sending the training nudge to the enterprise user device.

In accordance with one or more additional or alternative embodiments, one or more non-transitory computer-readable media storing instructions that, when executed by a computing platform comprising at least one processor, a communication interface, and memory, cause the computing platform to generate a fraud-susceptibility personality survey, send, to an enterprise user device, the fraud-susceptibility personality survey, receive, from the enterprise user device, information indicating how a user of the enterprise user device responded to the fraud-susceptibility personality survey, calculate a fraud-susceptibility behavioral psychology score for the user based on the user information, identify a user-specific predicted failure rate on one or more cybersecurity training modules based on the fraud-susceptibility behavioral psychology score, generate, based on the user-specific predicted failure rate and using a behavioral psychology training module, a dynamically adapted cybersecurity training template, and send, to the enterprise user device, the dynamically adapted cybersecurity training template, wherein sending the dynamically adapted cybersecurity training template to the enterprise user device causes the enterprise user device to display the one or more customized cybersecurity training modules.

### BRIEF DESCRIPTION OF THE DRAWINGS

The present disclosure is illustrated by way of example and not limited in the accompanying figures in which like reference numerals indicate similar elements and in which:
FIGS. 1A and 1B depict an illustrative operating environment for measuring user-specific fraud-susceptibility behavioral scores and dynamically generating customized cybersecurity training modules using fraud-susceptibility behavioral scores in accordance with one or more example embodiments;
FIGS. 2A-2E depict an illustrative event sequence for measuring user-specific fraud-susceptibility behavioral scores and dynamically generating customized cybersecurity training modules using fraud-susceptibility behavioral scores in accordance with one or more example embodiments;
FIGS. 3-6 depict illustrative graphical user interfaces for measuring user-specific fraud-susceptibility behavioral scores and dynamically generating customized cybersecurity training modules using fraud-susceptibility behavioral scores in accordance with one or more example embodiments; and
FIG. 7 depicts another illustrative method for measuring user-specific fraud-susceptibility behavioral scores and dynamically generating customized cybersecurity training modules using fraud-susceptibility behavioral scores in accordance with one or more example embodiments.

### DETAILED DESCRIPTION

In the following description of various illustrative embodiments, reference is made to the accompanying drawings, which form a part hereof, and in which is shown, by way of illustration, various embodiments in which aspects of the disclosure may be practiced. It is to be understood that other embodiments may be utilized, and structural and functional modifications may be made, without departing from the scope of the present disclosure. Various connections between elements are discussed in the following description. It is noted that these connections are general and, unless specified otherwise, may be direct or indirect, wired or wireless, and that the specification is not intended to be limiting in this respect.

Some aspects of the disclosure relate to measuring user-specific fraud-susceptibility behavioral scores and dynamically generating customized cybersecurity training modules using fraud-susceptibility behavioral scores. One or more of the systems and methods described herein provide ways of measuring a user's susceptibility to fall victim to phishing, fraud, and/or other cyberattacks based on behavioral psychology factors. In some arrangements, at a cybersecurity training computing platform comprising at least one processor, memory, and communication interface, a personality survey may be administered to a user to calculate a behavioral psychology score for the user based on one or more behavioral psychology factors. For instance, the cybersecurity training computing platform may administer the survey through a cybersecurity training portal. Because of where the training portal is positioned, the cybersecurity training computing platform may be able to customize the personality survey (e.g., to customize the contents of the survey and/or the manner in which the survey is administered) based on information about the user and information about the organization or company associated with the user (which may, e.g., be loaded/received from the training portal).

The cybersecurity training computing platform may use the behavioral psychology score for the user to determine a user-specific predicted failure rate on one or more cybersecurity training templates and/or other training modules. For instance, the cybersecurity training computing platform may use one or more scores from the personality survey (e.g., especially from a general decision-making portion of the survey) as a way to gauge failure rates of templates. Certain decision-making styles, personality traits, and/or levels of impulsivity may be reflected in different messaging styles that are found in phishing messages and may increase a given user's susceptibility to fall for an attack message (e.g., including a simulated phishing message). The cybersecurity training computing platform may account for these and/or other factors in determining a user-specific predicted failure rate for specific templates and/or modules.

As an example, if a simulated phishing message is framed in an authenticity frame (e.g., so as to appear to be from the company CEO), there may be certain personality traits and/or decision-making styles that may be more heavily influenced by this frame, and the cybersecurity training computing platform may adjust the user-specific predicted failure rate for a training template implementing this frame accordingly. Thus, given the message framing of a given training template (e.g., scarcity, authenticity, authority), the cybersecurity training computing platform may adjust the user-specific predicted failure rate for the training template based on the given user's behavioral psychology score.

In additional and/or alternative arrangements, the cybersecurity training computing platform may recommend different simulated attack templates (e.g., simulated phishing templates) for the organization or company based on survey results received from the employees of the organization or company. For example, if survey results from a relatively large number of employees suggested that they would be susceptible to an authenticity frame, the cybersecurity training computing platform may recommend using simulated attack templates and/or simulated phishing templates from a corporate category. Alternatively, an employee population with higher than average impulsivity might be correlated with being more susceptible to the "giveaway" or "free prize" type of lure, and the cybersecurity training computing platform accordingly may recommend using simulated attack templates and/or simulated phishing templates that include such a lure.

In some instances, the cybersecurity training computing platform may tailor user-specific training nudges based on the behavioral psychology score for the user and/or results from the personality survey. For instance, the cybersecurity training computing platform may tailor and/or otherwise adjust user-specific nudges to user-specific decision-making styles. Such user-specific nudges may, for instance, include reminders, push notifications, and/or other messages that request and/or remind a user to complete one or more training modules within a cybersecurity training portal.

In some instances, the cybersecurity training computing platform may dynamically modify and/or adapt cybersecurity training templates and/or other training modules based on the behavioral psychology score for the user and/or results from the personality survey. For instance, the cybersecurity training computing platform may adapt a cybersecurity training program and/or session for a user based on their behavioral psychology score and/or survey results. In some instances, this may include dynamically selecting training templates for the user on the fly based on their user-specific decision making style, e.g., as derived from the behavioral psychology score and/or survey results.

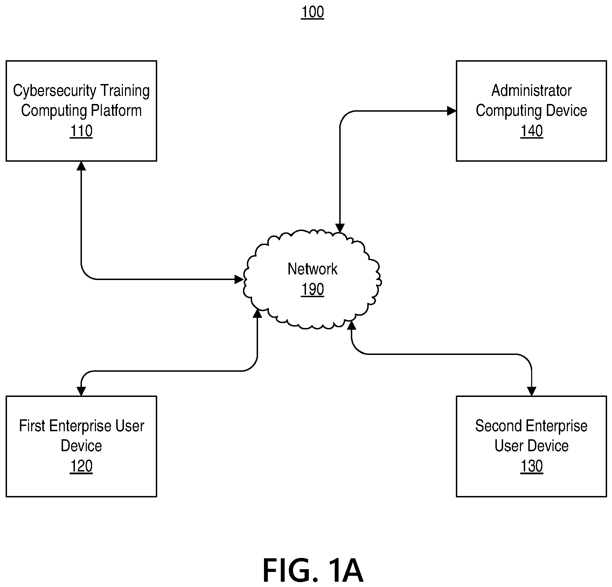

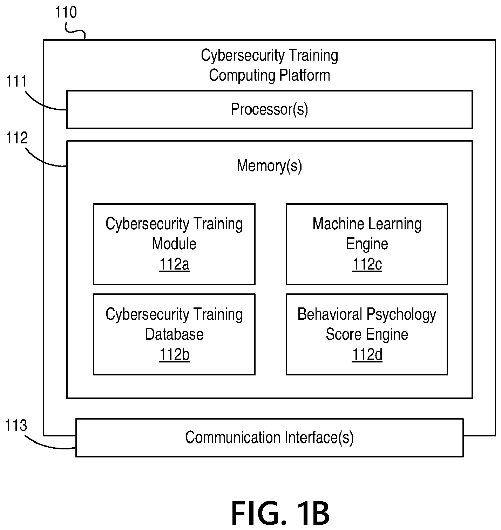

FIGS. 1A and 1B depict an illustrative operating environment for dynamically controlling access to linked content in electronic communications in accordance with one or more example embodiments. Referring to FIG. 1A, computing environment 100 may include various computer systems, computing devices, networks, and/or other operating infrastructure. For example, computing environment 100 may include a cybersecurity training computing platform 110, a first enterprise user device 120, a second enterprise user device 130, an administrator computing device 140, and a network 190.

Network 190 may include one or more wired networks and/or one or more wireless networks that interconnect cybersecurity training computing platform 110, first enterprise user device 120, second enterprise user device 130, administrator computing device 140, and/or other computer systems and/or devices. In addition, each of cybersecurity training computing platform 110, first enterprise user device 120, second enterprise user device 130, and administrator computing device 140 may be special purpose computing devices configured to perform specific functions, as illustrated in greater detail below, and may include specific computing components such as processors, memories, communication interfaces, and/or the like.

First enterprise user device 120 may be configured to be used by a first user (who may, e.g., be an enterprise user associated with an enterprise organization operating administrator computing device 140 and/or cybersecurity training computing platform 110). In some instances, first enterprise user device 120 may be configured to present one or more user interfaces associated with an electronic messaging application, which may receive input composing new messages, display content associated with received messages, display alerts, and/or otherwise facilitate sending, receiving, and/or otherwise exchanging messages and/or other data with cybersecurity training computing platform 110, e.g., as part of a cybersecurity training session, and/or with one or more other client devices, enterprise user devices (e.g., second enterprise user device 130, or the like), and/or other devices.

Second enterprise user device 130 may be configured to be used by a second user (who may, e.g., be an enterprise user associated with an enterprise organization operating administrator computing device 140 and/or cybersecurity training computing platform 110 and who may be different from the first user of first enterprise user device 120). In some instances, second enterprise user device 130 may be configured to present one or more user interfaces associated with an electronic messaging application, which may receive input composing new messages, display content associated with received messages, display alerts, and/or otherwise facilitate sending, receiving, and/or otherwise exchanging messages and/or other data with cybersecurity training computing platform 110, e.g., as part of a cybersecurity training session, and/or with one or more other client devices, enterprise user devices (e.g., first enterprise user device 120, or the like), and/or other devices.

Administrator computing device 140 may be configured to be used by an administrative user (who may, e.g., be a network administrator of an enterprise organization and/or who may operate cybersecurity training computing platform 110). Administrator computing device 140 may be configured to present one or more user interfaces associated with an administrative dashboard, receive and/or display one or more cybersecurity training results, and/or otherwise facilitate monitoring and management of one or more systems and/or devices included in computing environment 100.

Referring to FIG. 1B, cybersecurity training computing platform 110 may include one or more processor(s) 111, one or more memory(s) 112, and one or more communication interface(s) 113. In some instances, cybersecurity training computing platform 110 may be made up of a plurality of different computing devices, which may be distributed within a single data center or a plurality of different data centers. In these instances, the one or more processor(s) 111, one or more memory(s) 112, and one or more communication interface(s) 113 included in cybersecurity training computing platform 110 may be part of and/or otherwise associated with the different computing devices that form cybersecurity training computing platform 110.

In one or more arrangements, processor(s) 111 may control operations of cybersecurity training computing platform 110. Memory(s) 112 may store instructions that, when executed by processor(s) 111, cause cybersecurity training computing platform 110 to perform one or more functions, as discussed below. Communication interface(s) 113 may include one or more wired and/or wireless network interfaces, and communication interface(s) 113 may connect cybersecurity training computing platform 110 to one or more networks (e.g., network 190) and/or enable cybersecurity training computing platform 110 to exchange information and/or otherwise communicate with one or more devices connected to such networks.

In one or more arrangements, memory(s) 112 may store and/or otherwise provide a plurality of modules (which may, e.g., include instructions that may be executed by processor(s) 111 to cause cybersecurity training computing platform 110 to perform various functions), databases (which may, e.g., store data used by cybersecurity training computing platform 110 in performing various functions), and/or other elements (which may, e.g., include processing engines, services, and/or other elements). For example, memory(s) 112 may store and/or otherwise provide a cybersecurity training module 112a, a cybersecurity training database 112b, a machine learning engine 112c, and a behavioral psychology score engine 112d. In some instances, cybersecurity training module 112a may store instructions that cause cybersecurity training computing platform 110 to dynamically generate and score fraud-susceptibility personality surveys, to generate customized cybersecurity training modules based on survey scores and/or execute one or more other functions described herein. Additionally, cybersecurity training database 112b may store data that is used by cybersecurity training computing platform 110 in dynamically generating and scoring fraud-susceptibility personality surveys and/or adapting customized cybersecurity training modules based on survey scores and/or executing one or more other functions described herein. Machine learning engine 112c may store instructions and/or data that may cause and/or be used by cybersecurity training computing platform 110 to generate and score fraud-susceptibility personality surveys, dynamically adapt customized cybersecurity training modules based on survey scores, and/or execute one or more other functions described herein. Behavioral psychology score engine 112d may store instructions and/or data that cause cybersecurity training computing platform 110 to compute survey scores based on user selections of a fraud-susceptibility personality survey, and/or dynamically adjust one or more score weighting elements used in computing the survey score, e.g., in combination with machine learning engine 112c.

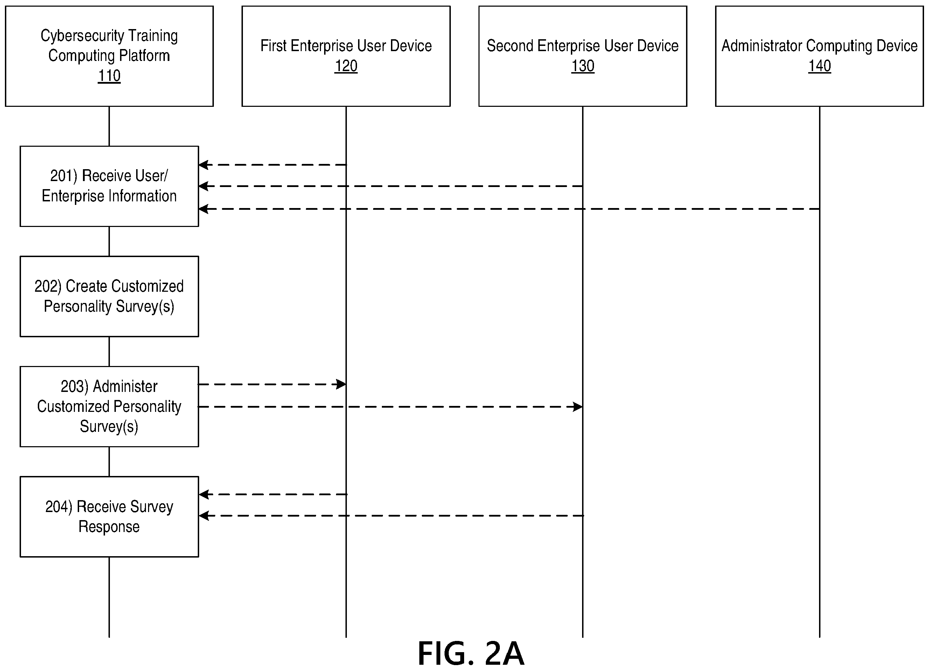

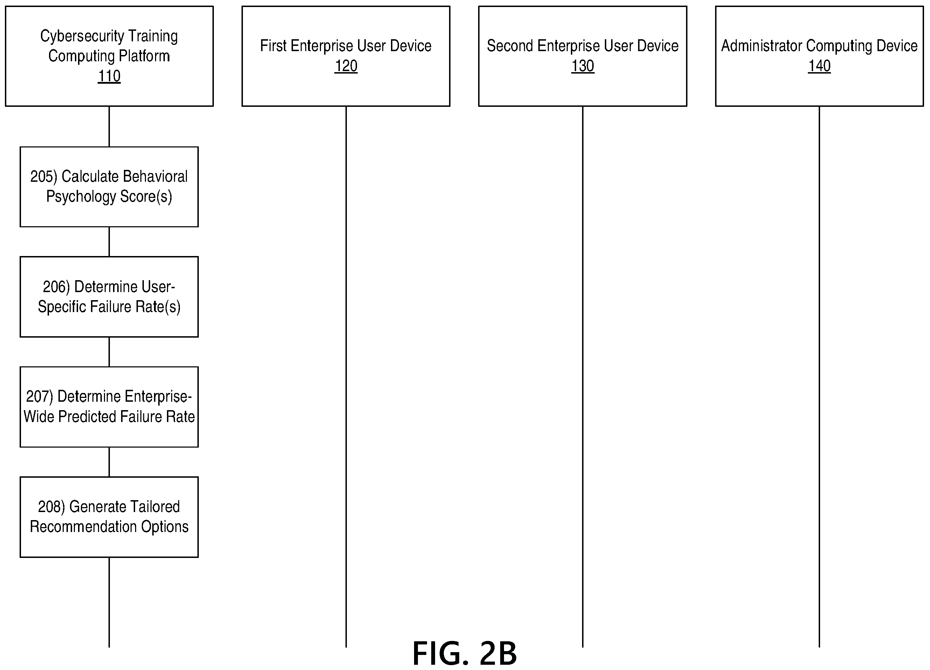

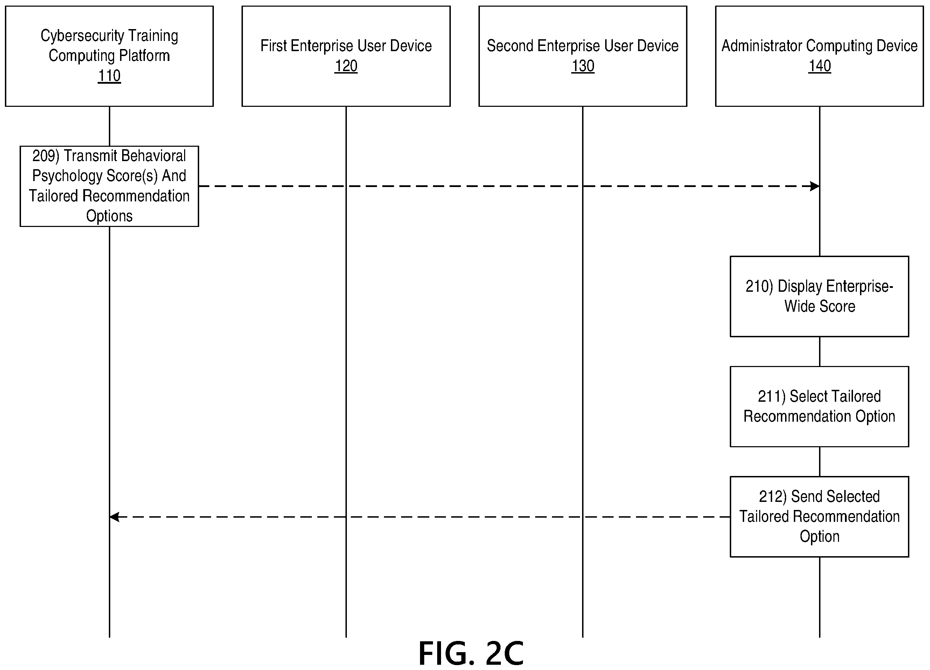

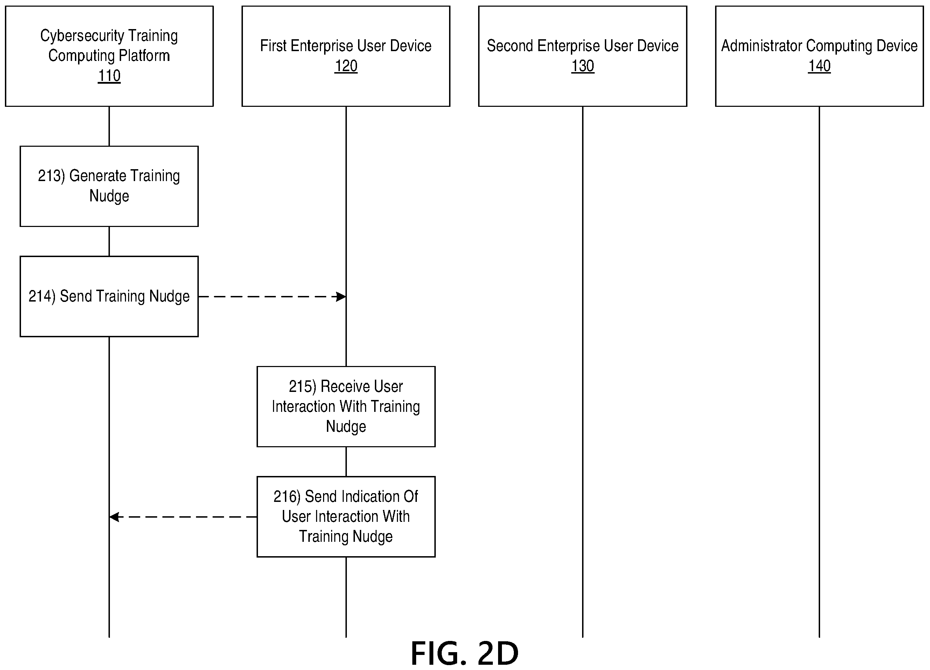

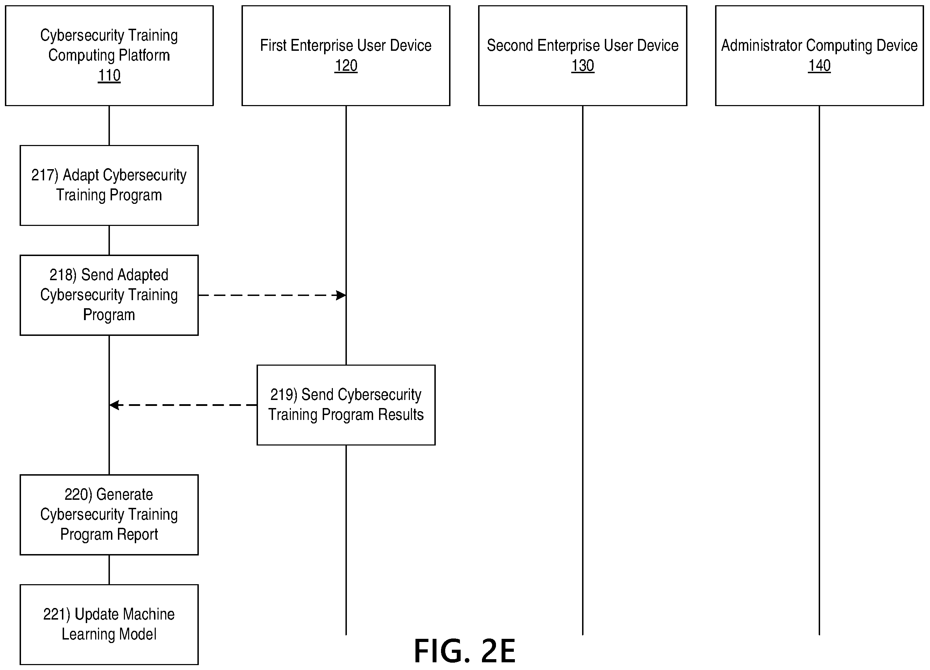

FIGS. 2A-2E depict an illustrative event sequence for measuring user-specific fraud-susceptibility behavioral scores and dynamically generating customized cybersecurity training modules using fraud-susceptibility behavioral scores in accordance with one or more example embodiments. More particularly, FIG. 2A depicts an illustrative event sequence for dynamically generating customized personality surveys configured for completion by users as part of cybersecurity training in accordance with one or more example embodiments. FIG. 2B depicts an illustrative event sequence for measuring one or more behavioral psychology scores based on results of the customized personality surveys in accordance with one or more example embodiments. FIG. 2C depicts an illustrative event sequence for generating and providing an enterprise-wide report of fraud-susceptibility behavioral scores in accordance with one or more example embodiments. FIG. 2D depicts an illustrative event sequence for generating and providing cybersecurity training nudges based on fraud-susceptibility behavioral scores in accordance with one or more example embodiments. FIG. 2E depicts an illustrative event sequence for dynamically adapting a cybersecurity training program based on fraud-susceptibility behavioral scores in accordance with one or more example embodiments.

Referring to FIG. 2A, at step 201, cybersecurity training computing platform 110 may receive user information and/or enterprise information in connection with the customization of one or more cybersecurity training modules. Such information may include various information components specific to one or more users at an enterprise organization, e.g., name, title, department, location, tenure at the enterprise organization, prior incidents of compromised or potentially compromised cybersecurity at a user enterprise device, a cybersecurity training history, or the like. Such information may additionally or alternatively include various information components specific to the enterprise organization itself, e.g., enterprise size, number of employees, relevant business sector(s), type and classification of confidential enterprise data, corporate structure, current cybersecurity practices, or the like. The information may be provided responsive to a prompt at an enterprise user device (e.g., enterprise user device 120, enterprise user device 130) or an administrator device (e.g., administrator computing device 140), or may be obtained by accessing one or more database files associated with the enterprise (e.g., via cybersecurity training database 112b).

Upon receiving the user information and/or enterprise information, the computing platform may generate one or more customized personality surveys, the cybersecurity training computing platform 110 may create one or more customized personality surveys at step 202. For example, the one or more customized personality surveys may include a fraud-susceptibility personality survey that relates to evaluating a particular user's susceptibility to fraud based on behavioral phycology factors. Such personality surveys may be customized to a user and/or to an enterprise organization based on information received at step 201. In some examples, the personality surveys may be based on existing psychological surveys, e.g., that have proved effective in prior experiments or situations. The personality surveys may be customized in some instances by reformatting questions to fit survey writing styles. In some instances, a customized personality survey may include a general decision-making portion at a beginning of the survey, and subsequent sections may be generated on the fly, based on received responses to the general decision-making section. In some instances, e.g., where the information provided at step 201 is lacking is some aspects or where no information was provided, the computing platform may generate a default personality survey at step 202.

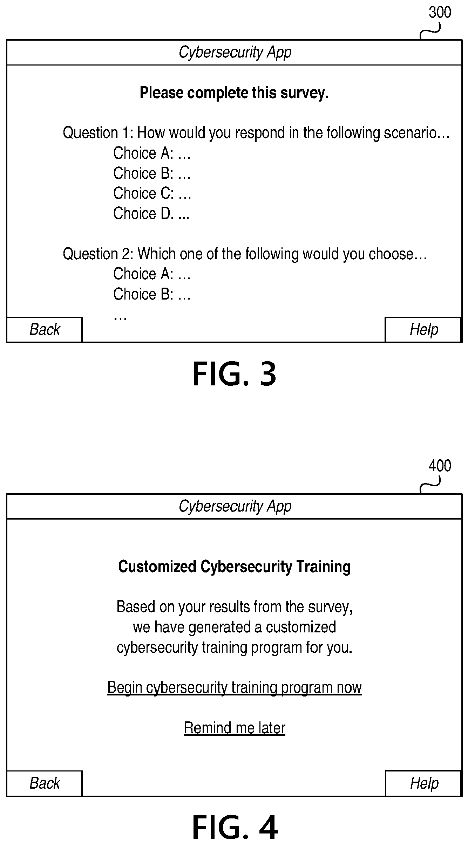

At step 203, cybersecurity training computing platform 110 may administer the one or more customized personality surveys, e.g., by sending the one or more customized personality surveys to first enterprise user device 120 and/or second enterprise user device 130. In some instances, administering the one or more customized personality surveys may include generating and sending a graphical user interface or web portal page to a user device, such as first enterprise user device 120 and/or second enterprise user device 130. For example, in some instances, in displaying the graphical user interface to administer the customized personality survey, a user device, such as the first enterprise user device 120, may display a graphical user interface similar to graphical user interface 300, which is shown in FIG. 3. In this example, the customized personality survey includes a plurality of questions, and for each questions, provides a plurality of answer choices. Still in other examples, administering the one or more customized personality survey may allow the user to provide a fill-in answer, or otherwise interact with the graphical user interface so as to provide information related to the relevant question. The one or more personality surveys may also be sent to one or more additional enterprise user devices. For example, at step 203, cybersecurity training computing platform 110 may send one or more customized personality surveys to a plurality of enterprise user devices, e.g., in accordance with initiating an enterprise-wide cybersecurity training program or assessing potential cybersecurity risks for a selected group of users within an enterprise. As another example, at step 203, cybersecurity training computing platform 110 may administer a customized personality survey at a single enterprise user device, e.g., so as to be able to assess that individual's potential cybersecurity risk.

At step 204, the cybersecurity training computing platform 110 may receive survey responses from one or more user devices, such as the first enterprise user device 120 and/or the second enterprise user device 130. For example, at step 204, the cybersecurity training computing platform 110 may receive the survey response from a particular user upon the user completing a customized personality survey. In another example, the cybersecurity training computing platform 110 may receive a response to each question as a user progresses through a customized personality survey. In such examples, the personality survey may be dynamically adapted on the fly, based on one or more responses received previously.

In some instances, in receiving the survey responses at step 204, cybersecurity training computing platform 110 may allow an analyst user or network administrator (e.g., a user of administrator computing device 140) to inspect the information being received by cybersecurity training computing platform 110 in real-time (e.g., contemporaneously as such content is being received by the cybersecurity training computing platform 110). Additionally or alternatively, cybersecurity training computing platform 110 may store a user-specific record of data received from the first enterprise user device 120 (as well as data received from other enterprise user devices), e.g., as the user of first enterprise user device 120 interacts with the personality survey and/or interacts with one or more cybersecurity training modules in a cybersecurity training application. The user-specific record (which may, e.g., be maintained by cybersecurity training computing platform 110) may enable an analyst user or network administrator (e.g., a user of administrator computing device 140) to inspect the user's complete cybersecurity training record and/or experience with the cybersecurity training application. In some instances, cybersecurity training computing platform 110 may provide and/or integrate with an administrative dashboard portal so as to provide administrator computing device 140 and/or other devices (which may, e.g., be used by analyst users and/or network administrators) with access to responses to fraud-susceptibility personality surveys, user profile inspection functions, user-specific records, and/or other information associated with users interactions with the cybersecurity training application. For instance, via such a portal, cybersecurity training computing platform 110 may host and/or provide (e.g., to administrator computing device 140) information identifying how specific users responded to a fraud-susceptibility personality survey and/or interacted with the cybersecurity training application, information identifying specific training modules that one or more users have completed, information identifying specific training modules that have been recommended to one or more users, and/or other information as described in greater detail below.

In some instances, as part of step 204, the cybersecurity training computing platform 110 may continue to monitor one or more enterprise user devices for additional survey responses to the one or more fraud-susceptibility personality surveys. The additional survey responses may be received from new enterprise user devices (e.g., enterprise user devices which have not yet previously provided survey response information relating to the one or more fraud-susceptibility personality surveys). In some instances, additional survey responses may be received from the first enterprise user device 120 and/or the second enterprise user device 130, e.g., if a user has opted to or has been prompted to complete a different fraud-susceptibility personality survey than a previously completed fraud-susceptibility personality survey. Upon receiving such additional survey responses, the cybersecurity training computing platform 110 may proceed to analyze and/or aggregate the survey response information, as will be described in greater detail below.

Referring to FIG. 2B, at step 205, the cybersecurity training computing platform 110 may calculate one or more behavioral psychology scores based on the received survey response information. In some instances, calculating the one or more behavioral psychology scores may be based on one or more behavioral psychology factors, e.g., where certain portions of the personality survey correspond to certain behavioral psychology factors. For example, the personality survey may include a plurality of questions, and calculating the one or more behavioral psychology scores at step 205 may include adding a plurality of behavioral psychology sub-scores, where different potential responses to each of the plurality of questions may be associated with different behavioral psychology sub-scores. As an example, at step 205, where the personality survey includes a general decision-making portion, calculating the behavioral psychology score may include weighting the general decision-making portion more than other portions of the personality survey. In some examples, the personality survey may be dynamically adapted as survey response information is received for the general decision-making portion of the personality survey and as the cybersecurity training computing platform 110 calculates a behavioral psychology score corresponding to the general decision-making portion of the personality survey.

In some embodiments, calculating the one or more behavioral psychology scores at step 205 may be based on the received user selections interacting with various portions of the personality survey. For example, at step 205, based on the user selections received, the cybersecurity training computing platform 110 may calculate a behavioral psychology score based on totaling components that are correctly and/or correctly not selected by the user in responding to various questions or prompts as part of the personality survey. In some examples, the cybersecurity training computing platform 110 may apply a weighting in total each of the various components of the behavioral psychology score, where the weighting may be determined by a variety of factors, as described in greater detail below.

At step 205, the cybersecurity training computing platform 110 may score the user responses to the fraud-susceptibility personality survey using a baseline score weighting, e.g., where all elements are scored equally. Still, various other techniques may be employed in assigning the baseline score weighting to the fraud-susceptibility personality survey. In some instances, all questions or portions of the fraud-susceptibility personality survey may be weighted equally. In some instances, various questions or portions of the fraud-susceptibility personality survey may be weighted based on an estimated difficulty associated with each questions or portions. In some instances, the questions or portions of the fraud-susceptibility personality survey may be attributed with a baseline weighting that takes into consideration that potential risk associated with a user falling for the potentially cybersecurity risk.

In some embodiments, in calculating one or more behavioral psychology scores at step 205, cybersecurity training computing platform 110 may employ one or more scoring algorithms, e.g., via behavioral psychology score engine 112d. For instance, behavioral psychology score engine 112d may use one or more machine-learning models to make a real-time determination as to a score of the fraud-susceptibility personality survey and generation of a training module in accordance with the score, as will be discussed in greater detail below. This approach may provide technical benefits and other advantages, because a cybersecurity training module may be dynamically adapted in real-time to suit a particular user.

Additionally or alternatively, in calculating a behavioral psychology score at step 205 based on the user responses received step 204, the cybersecurity training computing platform 110 may score a component of the one or more behavioral psychology scores based on a related difficulty associated with the component. Additionally or alternatively, in calculating a behavioral psychology score at step 205 based on the user responses received at step 204, cybersecurity training computing platform 110 may score components of the behavioral psychology score based on a measured susceptibility of the user to various different types of fraud. The measured susceptibilities may be determined based on evaluated survey response information relating to questions specific to a type of fraud and/or type of susceptibility. For instance, cybersecurity training computing platform 110 may attribute a different score component to a user response to a survey question relating to a first type of fraud susceptibility than a score component attributed to a user response to a survey question relating to a second type of fraud susceptibility. In some examples, the cybersecurity training computing platform 110 may generate a range of survey questions relating to a specific type of fraud susceptibility that are increasingly more difficult and may attribute more difficult questions with higher score components.

At step 206, the cybersecurity training computing platform 110 may determines a user-specific predicted failure rate on one or more cybersecurity training modules using the behavioral psychology score (e.g., certain decision-making styles, personality traits, and/or levels of impulsivity, and such factors). For example, at step 206, cybersecurity training computing platform 110 assess factors, such as certain decision-making styles, personality traits, technical experience, comfort levels with computer technology, levels of impulsivity, amount of previous experience with cybersecurity training, experience with specific training modules related to phishing, scores on other general knowledge cybersecurity assessments testing, behavior on previous phishing templates, and/or other such factors, based on the behavioral psychology score, and may associate one or more user-specific predicted failure rate with such factors. As will be described in more detail below, cybersecurity training database 112b may include a library of cybersecurity training modules, as well as one or more user-specific predicted failure rate associated with each cybersecurity training module.

At step 207, the cybersecurity training computing platform 110 may determine an enterprise-wide predicted failure rate on one or more cybersecurity training modules. For example, at step 207, each individual behavioral psychology score may be aggregated by the cybersecurity training computing platform 110, e.g., as the one or more behavioral psychology scores are calculated at step 205. In some examples, the enterprise-wide predicted failure rate may include a most common user-specific predicted failure rate determined for each of a plurality of users associated with the enterprise organization at step 206. In some instances, the cybersecurity training computing platform 110 may track user-specific predicted failure rate determined for each of a plurality of users associated with the enterprise organization at step 206, and may make one or more determinations based on the aggregated user-specific predicted failure rates. For example, the cybersecurity training computing platform 110 may determine one or more of the aggregated user-specific predicted failure rates that pose the greatest risk to the enterprise organization and/or that may be most significantly reduced by completion of a related cybersecurity training module. As another example, the cybersecurity training computing platform 110 may determine one or more of the aggregated user-specific predicted failure rates associated with a plurality of group of users within the enterprise organization (e.g., different business groups with the enterprise organization). In that regard, determining the enterprise-wide predicted failure rate at step 207 may include determined a plurality of enterprise-wide predicted failure rates and/or a number of determination associated with aggregated user-specific predicted failure rates.

At step 208, cybersecurity training computing platform 110 may generate tailored recommendation options based on the one or more behavioral psychology scores and/or survey responses. The tailored recommendations may be enterprise-wide or user-specific, or combinations thereof. In some examples, the tailored recommendation option may include a cybersecurity training template that is dynamically adapted based on the user-specific predicted failure rate and using a behavioral psychology training module, such as cybersecurity training module 112a.

Subsequently, cybersecurity training computing platform 110 may perform one or more additional steps based on the tailored recommendation options. For example, referring to FIG. 2C, at step 209, cybersecurity training computing platform 110 may transmit the one or more behavioral psychology scores and tailored recommendation options to the administrator computing device 140.

At step 210, the administrator computing device 140 may display an enterprise-wide behavioral psychology score. Additionally, information displayed at step 210 may include a breakdown of various aggregated behavioral psychology scores, such as groups of users having the same title or working within the same sub-organization. The information display may include a tailored recommendation option for the enterprise as a whole and/or for various groupings within the enterprise, e.g., for which aggregated behavioral psychology scores are provided. In some instances, a plurality of tailored recommendation options may be provided as part of step 209, e.g., for an analyst user or network administrator (e.g., a user of administrator computing device 140) to review and select one or more of the provided tailored recommendation options.

In some instances, at step 210, cybersecurity training computing platform 110 may aggregate a plurality of user behavioral psychology scores and/or user selections to fraud-susceptibility personality surveys received from one or more enterprise user devices, such as the first enterprise user device 120, and send the aggregated information to the administrator computing device 140. For example, at step 210, the cybersecurity training computing platform 110 may aggregate behavioral psychology scores and/or user selections to fraud-susceptibility personality surveys associated with an enterprise organization and/or groups of user within the enterprise organization. Administrator computing device 140 may then display information sufficient to review and analyze the aggregated information to understand current cybersecurity susceptibility and/or training statuses of various users and/or groups of users across the enterprise organization.

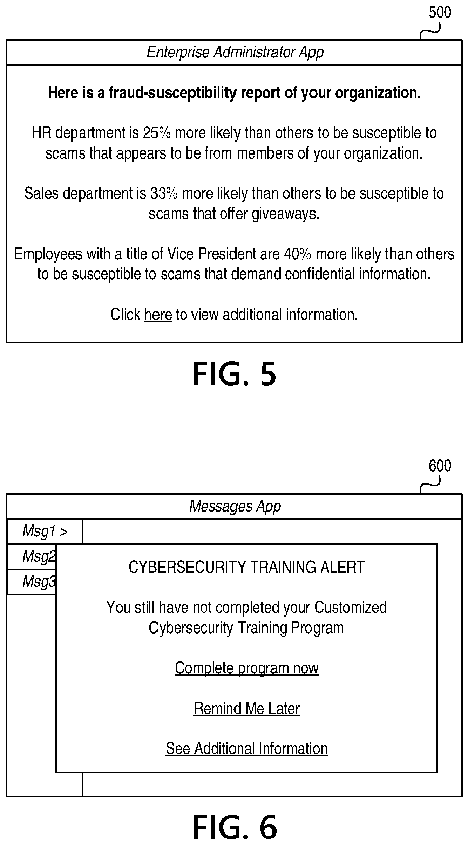

For example, in displaying the enterprise-wide score report at step 210, cybersecurity training computing platform 110 may cause the administrator computing device 140 to generate, display, and/or otherwise present one or more graphical user interfaces which may, e.g., provide information related to the enterprise-wise score report (e.g., graphical user interface 500 of FIG. 5). As shown in FIG. 5, graphical user interface 500 may include a number of metrics, calculations, and/or determinations related to the information received in response to the fraud-susceptibility personality survey, including calculated behavioral psychology scores and predicted failures rates for one or more individuals and/or groups of individuals within the enterprise organization (e.g., "HR department is 25% more likely than others to be susceptible to scams that appears to be from members of your organization"; "Sales department is 33% more likely than others to be susceptible to scams that offer giveaways"; "Employees with a title of Vice President are 40% more likely than others to be susceptible to scams that demand confidential information"). Graphical user interface 500 may include a link to view additional information relating to metrics, calculations, and/or determination made as part of the enterprise report. In some instances, this additional information may include the graphical depiction of metrics, calculations, and/or determination made as part of the enterprise report. In some examples, one or more behavioral psychology scores may be incorporated into an overall score that provides information as to how an enterprise's cybersecurity training program is performing. In some examples, one or more behavioral psychology scores may be combined with one or more other user-level factors such as performance on phishing templates, participation in training program, or level of phishing attacks sent, and, in some instances, cybersecurity training computing platform 110 may subsequently produce a list of highly vulnerable users recommended for additional training or scrutiny.

At step 211, the administrator computing device 140 may receive a selection of a tailored recommendation option, e.g., via a user interaction with a component of information displayed at step 210. In some instances, more than one tailored recommendation option may be selected as part of step 211. For example, a first tailored recommendation option may be selected for a first user group within the enterprise organization and a second tailored recommendation option may be selected for a second user group within the enterprise organization. As another example, a first tailored recommendation option may be selected for users associated with a title of "Associate," and a second tailored recommendation option may be selected users associated with the title of "VP." As yet another example, individual tailored recommendation options may be received for each user for which a behavioral psychology score is displayed.

At step 212, the administrator computing device 140 may send the one or more selected tailored recommendation options to the cybersecurity training computing platform 110. Additional instructions or information may also be sent to cybersecurity training computing platform 110 at step 212, such as instructions to prompt more users of the enterprise organization to complete a fraud-susceptibility personality survey, instructions to provide more information relating to one or more users or groups of users, a request to provide more information relating to an identified type of fraud susceptibility, or the like.

Now referring to FIG. 2D, at step 213, the cybersecurity training computing platform 110 may generate a training nudge specific to a user at an enterprise user device, e.g., the first enterprise user device 120. The training nudge may, in some instances, be generated based on a calculated fraud-susceptibility behavioral psychology score, an identified user-specific predicted failure rate, information indicating how the user at the first enterprise user device 120 responded to the fraud-susceptibility personality survey, information relating to one or more cybersecurity training modules completed by the user at the first enterprise user device 120, and/or other information. For example, a plurality of training nudges may each be associated with a corresponding range of fraud-susceptibility behavioral psychology scores, and the cybersecurity training computing platform 110 may generate an appropriate training nudge for a user based on the range within which that user's fraud-susceptibility behavioral psychology score falls. As another example, a first training nudge may be generated based on the calculated fraud-susceptibility behavioral psychology score exceeding a first threshold, a second training nudge may be generated based on the calculated fraud-susceptibility behavioral psychology score exceeding a second threshold, and so on. In yet another example, the cybersecurity training computing platform 110 may generate a training nudge based on first identifying a user-specific predicted failure rate and next determining whether the calculated fraud-susceptibility behavioral psychology score exceeds a threshold associated with that user-specific predicted failure rate.

At step 214, the cybersecurity training computing platform 110 may send the training nudge to the specific to the user at the first enterprise user device 120 to the first enterprise user device. In some instances, sending the training nudge to the first enterprise user device 120 at step 214 may cause the first enterprise user device 120 may display a graphical user interface similar to graphical user interface 600, which is shown in FIG. 6. In this example, the displayed training may include a message such as "Cybersecurity Training Alert: You still have not completed your customized cybersecurity training program." The user at the first enterprise user device 120 may then interact with the training nudge by selecting from a number of options provided at the graphical user interface 600. For example, as shown in the graphical user interface 600 of FIG. 6, the user may select to complete the cyber security training program, to have a reminder provided at a later time to complete the cybersecurity training program, to dismiss the training notification, to view additional information related to the training nudge and related determinations made thereof, or the like.

At step 215, the first enterprise user device 120 may receive information related to a user interaction with the training nudge. In some instances the user interaction may include an indication that the user accepted a recommended cybersecurity training module, that the user ignored the training nudge, that the user hit a snooze button on the training nudge (e.g., to delay a timing for taking the recommended cybersecurity training module), or the like. At step 216, the first enterprise user device 120 may send the information related to a user interaction with the training nudge to the cybersecurity training computing platform 110. The information may be sent to the cybersecurity training computing platform 110 at step 216 in a similar manner that the survey response information is sent to the cybersecurity training computing platform 110 at step 204.

Now referring to FIG. 2E, at step 217, the cybersecurity training computing platform 110 may generate a dynamically adapted cybersecurity training template for the user associated with the first enterprise user device 120. For example, at step 217, cybersecurity training computing platform 110 may dynamically adapt a cybersecurity training module to include training aspects in accordance with each of the one or more additional training areas, e.g., using machine learning engine 112c. For example, the cybersecurity training computing platform 110 may generate the cybersecurity training template to include questions or content corresponding to the additional training areas that are more relevant or critical for a particular user and/or remove questions or content corresponding to other areas that are less relevant or less critical for that user. As a result, cybersecurity training computing platform 110 may generate a training module specifically tailored to the user at the first enterprise user device 120. For instance, at step 217, cybersecurity training computing platform 110 may determine that, based on response information from the fraud-susceptibility personality survey, a user may be particularly susceptible to messages that appear to be from a corporate authority, messages that promise a monetary or other prize, messages that indicate a password reset or other update, or the like. In other examples, at step 217, cybersecurity training computing platform 110 may determine that a user may be particularly susceptible to suspicious hyperlinks, suspicious sender addresses, suspicious message content, or the like.

In addition, in generating a dynamically adapted cybersecurity training template for the user at step 217, cybersecurity training computing platform 110 may use a set of predefined scores and thresholds to determine a level of risk associated with the user based on the behavioral psychology score calculated by cybersecurity training computing platform 110 at step 205. For example, each question in a plurality of questions in the fraud-susceptibility personality survey may correspond to a different component used in calculating the behavioral psychology score. After receiving the various selections interacting at the fraud-susceptibility personality survey at the first enterprise user device 120, cybersecurity training computing platform 110 may calculate portions of the overall behavioral psychology score corresponding to the various questions and/or sections of the fraud-susceptibility personality survey. Cybersecurity training computing platform 110 then may sum these score portions to determine an overall behavioral psychology score for the user and may compare the overall behavioral psychology score with one or more predetermined thresholds. For example, if the overall behavioral psychology score exceeds a medium risk threshold but not a high risk threshold, cybersecurity training computing platform 110 may determine the user is associated with a "medium" risk. If the overall behavioral psychology score exceeds both the medium risk threshold and the high risk threshold, cybersecurity training computing platform 110 may determine the user is associated with a "high" risk. If the overall behavioral psychology score does not exceed the medium risk threshold or the high risk threshold, cybersecurity training computing platform 110 may determine the user is associated with a "low" risk. If, for instance, the cybersecurity training computing platform 110 determines the user to be associated with a "low" risk, cybersecurity training computing platform 110 may determine that no additional training areas are recommended for the user at that time. Alternatively, if the cybersecurity training computing platform 110 determines the user to be associated with a "medium" or "high" risk, cybersecurity training computing platform 110 may proceed to generate a dynamically adapted cybersecurity training template for the user.

In some embodiments, generating the dynamically adapted cybersecurity training template for the user at the first enterprise user device 120 may include determining that incorrectly selected questions or portions of the fraud-susceptibility survey that are associated with various element categories. For example, cybersecurity training computing platform 110 may categorize each of the incorrectly selected questions or portions of the fraud-susceptibility survey and determine a most common element category of the incorrectly selected questions or portions, or an element category associated with a higher risk exposure. In some examples, cybersecurity training computing platform 110 may determine a message category (e.g., personal message, business message, banking message, pornographic message, gambling message, etc.), for which the user may be more susceptible to a threat and use this category in determining additional training areas for the user as discussed above. In some instances, cybersecurity training computing platform 110 may determine one or more susceptibility categories associated with the fraud-susceptibility personality survey by matching contents from the fraud-susceptibility personality survey with information defined in one or more category training templates maintained by cybersecurity training computing platform 110.

In some embodiments, generating the dynamically adapted cybersecurity training template for the user at the first enterprise user device 120 may include determining one or more user-specific risk factors associated with a user of the first enterprise user device 120. For example, in generating the dynamically adapted cybersecurity training template for the user at the first enterprise user device 120 at step 217, cybersecurity training computing platform 110 may determine one or more user-specific risk factors associated with a user of the first enterprise user device 120, as discussed above. In some instances, cybersecurity training computing platform 110 may determine that certain elements of the fraud-susceptibility personality survey are associated with a particular user-specific risk factor, and thus certain incorrectly selected questions or portions of the fraud-susceptibility personality survey may cause the cybersecurity training computing platform 110 to determine certain user-specific risk factor associated with the incorrectly selected questions or portions.

For example, cybersecurity training computing platform 110 may maintain and/or access information defining a group of "very susceptible persons" (who may, e.g., be enterprise users who are members of and/or otherwise associated with an enterprise organization operating cybersecurity training computing platform 110). In some instances, cybersecurity training computing platform 110 may dynamically score various enterprise users (e.g., based on the behavioral psychology score calculated at step 205), so as to dynamically add and/or remove specific users to and/or from the group of very susceptible persons (e.g., instead of using a static list of very susceptible persons) and/or otherwise update the group. In this way, cybersecurity training computing platform 110 may regularly and/or periodically reevaluate whether each user in the group of very susceptible persons continues to qualify as a very susceptible person and/or should continue to be included in the group (which may, e.g., be subject to receiving various cybersecurity training modules at more frequent intervals than other groups of users). In some instances, cybersecurity training computing platform 110 may identify a particular user as a very susceptible person based on calculating a behavioral psychology score for the user and determining that the behavioral psychology score exceeds a predetermined threshold. As noted above, in some instances, a user who is classified as a high-risk user and/or who is a member of a very susceptible persons group may be subject to receiving dynamically adapted cybersecurity training templates by cybersecurity training computing platform 110 more often.

In some embodiments, generating the dynamically adapted cybersecurity training template for the user at the first enterprise user device 120 may include identifying that a user of the first enterprise user device 120 is included in a "very susceptible persons" group associated with an enterprise organization. For example, in generating the dynamically adapted cybersecurity training template at step 217, cybersecurity training computing platform 110 may identify that a user of the first enterprise user device 120 is included in a "very susceptible persons" group associated with the enterprise organization operating cybersecurity training computing platform 110. For instance, cybersecurity training computing platform 110 may maintain, access, and/or update information defining a group of "very susceptible persons" (who may, e.g., be enterprise users who are members of and/or otherwise associated with an enterprise organization operating cybersecurity training computing platform 110), as discussed above. In some instances, the users included in the group of very susceptible persons may be users who have relatively less seniority within the organization than other users, users who have previously fallen for actual phishing or other malicious messages, users who have previously scored low in one or more cybersecurity training modules, and/or users who are targeted more frequently by malicious actors than other users. In addition, if the user of the first enterprise user device 120 is included in this group, cybersecurity training computing platform 110 may determine to increase an amount or duration of cybersecurity training in generating the dynamically adapted cybersecurity training template at step 217. In some instances, this increase may result in cybersecurity training computing platform 110 generating a customized training template specific to a "very susceptible persons" group, as discussed in greater detail below.

In some embodiments, generating the dynamically adapted cybersecurity training template may include evaluating various factors associated with the user response information received from the first enterprise user device 120 in response to the fraud-susceptibility personality survey. For example, in generating the dynamically adapted cybersecurity training template at step 217, cybersecurity training computing platform 110 may separately evaluate various questions or sections of the fraud-susceptibility personality survey and associate each of the questions or sections with one or more factors. Based on associating each of the questions or sections with such factors and evaluating the user response information received from the first enterprise user device 120, cybersecurity training computing platform 110 may evaluate such information as part of generating the dynamically adapted cybersecurity training template.

Still further, the cybersecurity training computing platform 110 may generate a new cybersecurity training program and/or may dynamically adapt an existing cybersecurity training program at step 217 in accordance with the information obtained as part of steps 204 through 208. For example, the cybersecurity training computing platform 110 may dynamically adapt one or more existing cybersecurity training templates to add, remove, and/or modify one or more elements associated with user-specific failure rates determined at step 206. As another example, cybersecurity training computing platform 110 may generate a new cybersecurity training program comprised of a plurality of training modules, where each module is associated with a respective user-specific failure rate and/or behavioral psychology sub-scores based on previously received user responses to the fraud-susceptibility personality survey. As another example, cybersecurity training computing platform 110 may dynamically adapt an existing cybersecurity training module to modify one or more elements (e.g., to have lower or high associated difficulties) in accordance with information based on previously received user responses to the fraud-susceptibility personality survey.

At step 218, cybersecurity training computing platform 110 may send the dynamically adapted cybersecurity training template to the first enterprise user device 120. For example, at step 218, cybersecurity training computing platform 110 may send the training template directly to the first enterprise user device 120 and/or may cause the training template to be sent to first enterprise user device 120 via a cybersecurity training application or portal.

In some instances, cybersecurity training computing platform 110 may determine a message category (e.g., personal message, business message, banking message, pornographic message, gambling message, etc.) for which the user may be more susceptible to a threat and use this category in generating the dynamically adapted cybersecurity training template for the user. Additionally or alternatively, cybersecurity training computing platform 110 may determine one or more risk factors associated with the user of the first enterprise user device 120 and use these user-specific risk factors in generating the dynamically adapted cybersecurity training template for the user. For instance, cybersecurity training computing platform 110 may determine whether the user of the first enterprise user device 120 is a "very susceptible person" within an enterprise organization operating cybersecurity training computing platform 110 and/or otherwise a highly susceptible user (e.g., based on results of the fraud-susceptibility personality survey and/or based on an enterprise-specific index of users), and this determination may correspond to a particular factor that is used by cybersecurity training computing platform 110 in determining an adapted cybersecurity training area for the user, as discussed in greater detail below.

In some instances, at step 218, the cybersecurity training computing platform 110 may send a dynamically adapted cybersecurity training program to one or more additional devices associated with the enterprise organization, which may then send the simulated attack email on to the first enterprise user device. In some examples, the dynamically adapted cybersecurity training program may also be sent to one or more additional enterprise user devices, such as second enterprise user device 130. For example, at step 218, cybersecurity training computing platform 110 may send the dynamically adapted cybersecurity training program to a plurality of enterprise user devices, e.g., in accordance with facilitating an enterprise-wide cybersecurity training or a cybersecurity training for a selected group of users within an enterprise. As another example, at step 218, cybersecurity training computing platform 110 may send the dynamically adapted cybersecurity training program to a single enterprise user device, e.g., based on a determination that a user at a specified enterprise user device may be susceptible to a certain type of cybersecurity threat, based on a determination that the user has not completed a cybersecurity training program is a specified time period, or the like. In this manner, the dynamically adapted cybersecurity training program provides a practical application of using the behavioral psychology score (e.g., calculated at step 205). Thus, aspects of the present disclosure address technical problems associated with providing customized cybersecurity training that is dynamically tuned to the specific proficiency and/or vulnerabilities of a particular user.

At step 219, cybersecurity training computing platform 110 may receive results responsive to the adapted cybersecurity training program from the first enterprise user device 120. For example, the results received at step 219 may indicate a level of cybersecurity proficiency or competency for the user of the first enterprise user device 120. In some instances the results may indicate whether the user started and/or completed the adapted cybersecurity training program and/or additional metrics relating to user interaction with the adapted cybersecurity training program, such as whether the user completed a test module as part of the adapted cybersecurity training program and how the user performed on the test module.

In some instances, at step 219, the first enterprise user device 120 may display the adapted cybersecurity training program, e.g., in training portal. As an example, in displaying the adapted cybersecurity training program, cybersecurity training computing platform 110 may cause first enterprise user device 120 to generate, display, and/or otherwise present a graphical user interface similar to graphical user interface 400, which is illustrated in FIG. 4. In that regard, a notification that the adapted cybersecurity training program is available may be provided on graphical user interface 400. As seen in FIG. 4, graphical user interface 400 may include a description of the adapted cybersecurity training program (e.g., "Based on your results from the survey, we have generated a customized cybersecurity training program for you") so as to notify the user at the first enterprise user device 120 that the training program is customized based on the survey response information from the fraud-susceptibility personality survey. The graphical user interface 400 may also include one or more selectable options that allow the user to take further steps with the adapted cybersecurity training program, such as to begin the training program, to set a reminder for a later time, to obtain more information related to the adapted cybersecurity training program, and the like.

As part of step 219, the first enterprise user device 120 may receive one or more user interactions with the adapted cybersecurity training program, e.g., completing the training program, taking one or more training program quizzes, setting a reminder to take the training program at another time, and the like. In that regard, the cybersecurity training computing platform 110 may receive information related to how a user performed in taking the adapted cybersecurity training program.

In some instances, at step 219, the cybersecurity training computing platform 110 may receive confirmation from the first enterprise user device 120 that the user will take the adapted cybersecurity training program. In some examples, at step 219, the cybersecurity training computing platform 110 may receive an indication that the user at the first enterprise user device 120 has declined or postponed the adapted cybersecurity training program, e.g., where the graphical user interface 400 allows the user to interact with the cybersecurity training prompt in a variety of ways, such as selecting to start the cybersecurity training program, to snooze the notification, to postpone the cybersecurity training program until a specified later time, to decline to take the cybersecurity training program, or the like.

At step 219, the cybersecurity training computing platform 110 may receive a notification that the user at the first enterprise user device 120 has completed the cybersecurity training program. In other examples, at step 219, the cybersecurity training computing platform 110 may receive a notification that the user at the first enterprise user device 120 has not completed the cybersecurity training program, e.g., after a specified time period has elapsed, or upon the user interacting with a prompt sent as part of step 218 to indicate that the user has declined to take the cybersecurity training program.

At step 220, the cybersecurity training computing platform 110 may generate a cybersecurity training program report indicating a cybersecurity training program status for various users across the enterprise organization, e.g., for users that have completed the fraud-susceptibility personality survey. In some instances, cybersecurity training program report may provide an indication of whether the user at the first enterprise user device 120 completed the adapted cybersecurity training program, as well as whether other users have completed respective dynamically adapted cybersecurity training programs. In some examples, at step 220, the cybersecurity training computing platform 110 may aggregate information received (e.g., user interactions with a cybersecurity training program portal and/or notifications relating to completion of one or more dynamically adapted cybersecurity training modules) from one or more enterprise user devices associated with an enterprise organization and/or groups of users within an enterprise organization. Administrator computing device 140 may be able to review and analyze the aggregated information to understand current cybersecurity susceptibility and/or training statuses of various users and/or groups of users across the enterprise organization.

Subsequently, at step 221, the cybersecurity training computing platform 110 may update machine learning models used for dynamically adapting cybersecurity training models based on received information from a fraud susceptibility personality survey. For example, at step 221, the cybersecurity training computing platform 110 may determine cybersecurity training programs based on the aggregated information received from one or more enterprise user devices and/or update machine learning models used in dynamically adapting the cybersecurity training template using machine learning engine 112c.

As noted above, cybersecurity training computing platform 110 may, in some instances, select and/or use different models in generating and/or dynamically adapting cybersecurity training modules. In addition, cybersecurity training computing platform 110 (and/or machine learning engine 112c) may be dynamically adapting and generating new cybersecurity training modules based on previously received survey response information, the cybersecurity training computing platform 110 may be able to tailor various cybersecurity training programs to the needs of one or more users or groups of users within an enterprise organization. The ability to dynamically tailor such cybersecurity training programs may provide one or more technical advantages over conventional approaches in which the same training is applied to each user regardless of a user's susceptibility to cybersecurity threats. Moreover, cybersecurity training computing platform 110 may, in some instances, apply one or more rules that were trained and/or learned by cybersecurity training computing platform 110 in generating dynamically adapted cybersecurity training programs across different groups of users. For instance, cybersecurity training computing platform 110 may apply one or more machine-learned rules for dynamically generating and adapting cybersecurity training modules based on analyzing survey response information and/or interactions with adapted cybersecurity training modules.

For instance, cybersecurity training computing platform 110 may apply one or more machine-learned rules for dynamically generating and adapting cybersecurity training modules based on analyzing survey response information and/or interactions with adapted cybersecurity training modules. The cybersecurity training computing platform 110 may also apply one or more machine-learned rules for generating fraud-susceptibility personality surveys based on previously received user information and/or other interactions with other (e.g., similar) fraud-susceptibility personality surveys.

In some instances, cybersecurity training computing platform 110 may utilize one or more optimization rules for implementing one or more cybersecurity training programs. Such optimization rules may, for instance, define different policies for generating one or more cybersecurity training programs adapted for different members of different enterprise user groups. For example, users who are members of a senior management user group within an enterprise organization may be assigned to a cybersecurity training generated by the cybersecurity training computing platform 110 that has a higher level of difficulty than other users. Advantageously, such optimization rules may, for selected user groups, provide cybersecurity training programs better tailored to the selected user groups, than might otherwise be the case, e.g., when implementing the same cybersecurity training for all users across an enterprise organization regardless of the user or the user's actual susceptibility to a potential cyber-attack. In this way, such optimization rules may increase the overall effectiveness of cybersecurity training computing platform 110 for various users. Additionally the fraud-susceptibility personality survey tools and/or related scoring mechanisms may provide a gamification element to cybersecurity training programs, which may result in such cybersecurity training programs being more appealing for users to complete.

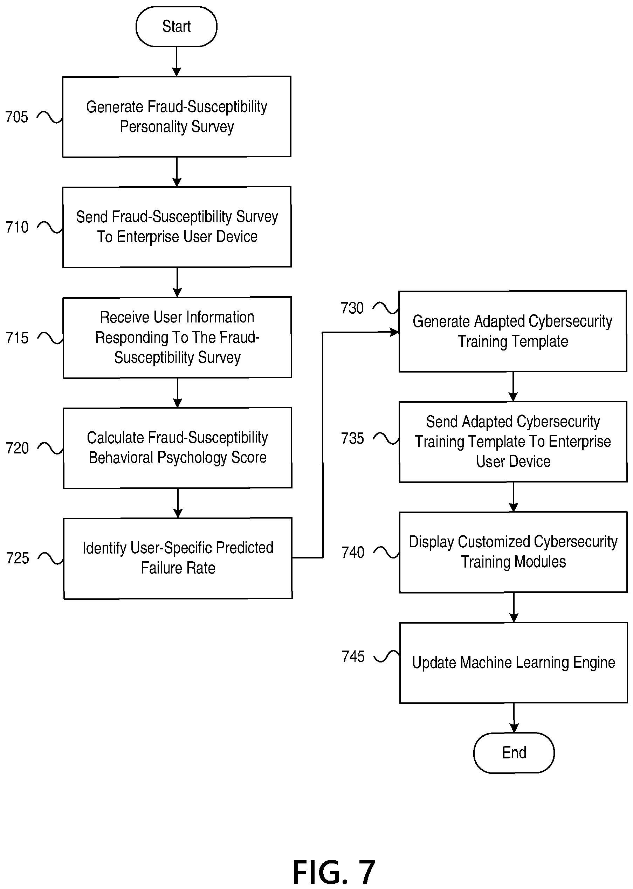

FIG. 7 depicts an illustrative method for measuring user-specific fraud-susceptibility behavioral scores and dynamically generating customized cybersecurity training modules using fraud-susceptibility behavioral scores in accordance with one or more example embodiments. Referring to FIG. 7, at step 705, a computing platform having at least one processor, a communication interface, and memory may generate a fraud-susceptibility personality survey. In some instances, the fraud-susceptibility personality survey may be generated based on information received from one or more users and/or based on information relating to an enterprise organization. In that regard, generating the fraud-susceptibility personality survey may include customizing one or more portions of the fraud-susceptibility personality survey based on user information and/or enterprise information. The fraud-susceptibility personality survey may include a plurality of questions. In some examples, the fraud-susceptibility personality survey may include a plurality of sections, such as a general decision-making section and/or one or more specified decision-making sections.

At step 710, the computing platform may send the generated fraud-susceptibility personality survey to an enterprise user device associated with a user. Sending the fraud-susceptibility personality survey at step 710 may include displaying the fraud-susceptibility personality survey in a cybersecurity training application or portal and allowing user interactions with one or more portions of the displayed fraud-susceptibility personality survey. In some examples, sending the fraud-susceptibility personality survey may include generating and sending one or more graphical user interfaces or web portal pages to the enterprise user device.

At step 715, in response to fraud-susceptibility personality survey, the computing platform may receive user information responding to the fraud-susceptibility personality survey based on user interactions with the enterprise user device with the fraud-susceptibility personality survey displayed thereon. The user information may indicate how a user of an enterprise user device responded to the fraud-susceptibility personality survey. In some examples, in addition to the user information from the enterprise user device, the computing platform may receive additional user information related to additional user responses to the fraud-susceptibility survey from one or more other enterprise user devices.

At step 720, based on the user information responding to the fraud-susceptibility personality survey, the computing platform may calculate, via behavioral psychology score engine 112d, a fraud-susceptibility behavioral psychology score for the user based on the user information. In some examples, the fraud-susceptibility personality survey may include a general decision-making portion, and calculating the fraud-susceptibility behavioral psychology score may then include weighting the general decision-making portion more than one or more other portions of the fraud-susceptibility personality survey. In some instances, generating the fraud-susceptibility personality survey may include dynamically adapting one or more portions of the fraud-susceptibility personality survey as the user responds to the general decision-making portion of the fraud-susceptibility personality survey. In instances where the fraud-susceptibility personality survey includes a plurality of questions, calculating the fraud-susceptibility behavioral psychology score may include adding a plurality of sub-scores, such that different potential responses to each of the plurality of questions are associated with different sub-scores.

At step 725, the computing platform may identify a user-specific predicted failure rate on one or more cybersecurity training modules based on the fraud-susceptibility behavioral psychology score. At step 730, based on the user-specific predicted failure rate and using a behavioral psychology training module, the computing platform may generate a dynamically adapted cybersecurity training template. In some instances, the dynamically adapted cybersecurity training template may be generated based on the fraud-susceptibility behavioral psychology score rather than the user-specific predicted failure rate. In some instances, the dynamically adapted cybersecurity training template may be generated based on both the fraud-susceptibility behavioral psychology score and the user-specific predicted failure rate. In some examples, generating the dynamically adapted cybersecurity training template may include selecting and inserting one or more modular cybersecurity training elements maintained by a cybersecurity training library into a cybersecurity training template.

At step 735, the computing platform may send the dynamically adapted cybersecurity training template to the enterprise user device. Sending the dynamically adapted cybersecurity training template to the enterprise user device may cause the enterprise user device to display the one or more customized cybersecurity training modules at step 740. Prior to generating and/or sending the dynamically adapted cybersecurity training template, the computing platform may generate a training nudge for the user to complete one or more customized cybersecurity training modules. Subsequently, the computing platform may send the training nudge to the enterprise user device. In some instances, generating the training nudge may include customizing one or more aspects of the training nudge using the behavioral psychology training module. In some instances, the computing platform may receive training program results based on user interaction with one or more customized cybersecurity training modules.

At step 745, based on the information received, the computing platform may update the machine learning model based on the received information (e.g., the user information responding to the fraud-susceptibility survey received at step 710 and/or information relating to results of the adapted cybersecurity training template sent at step 735). In some instances, the machine learning model that is updated at step 745, may be used in generating the fraud-susceptibility personality survey and/or the dynamically adapted cybersecurity training template. For example, in updating the machine learning model at step 745, the computing platform may update a machine learning model used to generate the dynamically adapted cybersecurity training template based on cybersecurity training program results. As another example, the computing platform may aggregate information received from various enterprise user devices to update the machine learning model. In some instances, the computing platform may provide, to an enterprise administrator device, a collective fraud-susceptibility behavioral psychology score for a group of users associated with an enterprise organization, e.g., based on aggregated information. In some instances, the computing platform may provide, to the enterprise administrator device, one or more tailored cybersecurity training recommendation options based on the collective fraud-susceptibility behavioral psychology score.

In some examples, the computing platform may, via the machine learning engine 112c, update the machine learning model used to dynamically generate and/or adapt fraud-susceptibility personality surveys based on available information related to one or more users and/or information related to an enterprise organization. In some examples, the computing platform may, via the machine learning engine 112c, update the machine learning model used to dynamically generate and/or adapt cybersecurity training modules and/or determined areas of training for users based on identified user-specific predicted failures rates and/or calculated fraud-susceptibility behavioral psychology scores. In some examples, at step 745, the computing platform may update a machine learning model used in generating cybersecurity training programs based on, e.g., information relating to results of the adapted cybersecurity training template sent at step 735.

One or more aspects of the disclosure may be embodied in computer-usable data or computer-executable instructions, such as in one or more program modules, executed by one or more computers or other devices to perform the operations described herein. Program modules may include routines, programs, objects, components, data structures, or the like that perform particular tasks or implement particular abstract data types when executed by one or more processors in a computer or other data processing device. The computer-executable instructions may be stored as computer-readable instructions on a computer-readable medium such as a hard disk, optical disk, removable storage media, solid-state memory, RAM, or the like. The functionality of the program modules may be combined or distributed as desired in various embodiments. In addition, the functionality may be embodied in whole or in part in firmware or hardware equivalents, such as integrated circuits, application-specific integrated circuits (ASICs), field programmable gate arrays (FPGA), or the like. Particular data structures may be used to more effectively implement one or more aspects of the disclosure, and such data structures are contemplated to be within the scope of computer executable instructions and computer-usable data described herein.

One or more aspects described herein may be embodied as a method, an apparatus, or as one or more computer-readable media storing computer-executable instructions. Accordingly, those aspects may take the form of an entirely hardware embodiment, an entirely software embodiment, an entirely firmware embodiment, or an embodiment combining software, hardware, and firmware aspects in any combination. In addition, various signals representing data or events as described herein may be transferred between a source and a destination in the form of light or electromagnetic waves traveling through signal-conducting media such as metal wires, optical fibers, or wireless transmission media (e.g., air or space). The one or more computer-readable media may be and/or include one or more non-transitory computer-readable media.

As described herein, the various methods and acts may be operative across one or more computing servers and one or more networks. The functionality may be distributed in any manner, or may be located in a single computing device (e.g., a server, a client computer, or the like). For example, in alternative embodiments, one or more of the computing platforms discussed above may be combined into a single computing platform, and the various functions of each computing platform may be performed by the single computing platform. In such arrangements, any and/or all of the above-discussed communications between computing platforms may correspond to data being accessed, moved, modified, updated, and/or otherwise used by the single computing platform. Additionally or alternatively, one or more of the computing platforms discussed above may be implemented in one or more virtual machines that are provided by one or more physical computing devices. In such arrangements, the various functions of each computing platform may be performed by the one or more virtual machines, and any and/or all of the above-discussed communications between computing platforms may correspond to data being accessed, moved, modified, updated, and/or otherwise used by the one or more virtual machines.

Particular aspects of the subject matter disclosed herein are now set out in the following numbered clauses:
1. A computing platform, comprising: at least one processor; a communication interface; and memory storing computer-readable instructions that, when executed by the at least one processor, cause the computing platform to: generate a fraud-susceptibility personality survey; send, to an enterprise user device, the fraud-susceptibility personality survey; receive, from the enterprise user device, information indicating how a user of the enterprise user device responded to the fraud-susceptibility personality survey; calculate a fraud-susceptibility behavioral psychology score for the user based on the information; identify a user-specific predicted failure rate on one or more cybersecurity training modules based on the fraud-susceptibility behavioral psychology score; generate, based on the user-specific predicted failure rate and using a behavioral psychology training module, a dynamically adapted cybersecurity training template; and send, to the enterprise user device, the dynamically adapted cybersecurity training template, wherein sending the dynamically adapted cybersecurity training template to the enterprise user device causes the enterprise user device to display the one or more customized cybersecurity training modules.
2. The computing platform of clause 1, wherein generating the fraud-susceptibility personality survey includes customizing one or more portions of the fraud-susceptibility personality survey based on at least one of: user information or enterprise information.
3. The computing platform of clause 1 or 2, wherein the fraud-susceptibility personality survey includes a general decision-making portion and wherein calculating the fraud-susceptibility behavioral psychology score includes weighting the general decision-making portion more than one or more other portions of the fraud-susceptibility personality survey.
4. The computing platform of clause 3, wherein generating the fraud-susceptibility personality survey includes dynamically adapting one or more portions of the fraud-susceptibility personality survey as the user responds to the general decision-making portion of the fraud-susceptibility personality survey.
5. The computing platform of any of the preceding clauses, wherein sending the fraud-susceptibility personality survey includes generating and sending one or more graphical user interfaces or web portal pages to the enterprise user device.
6. The computing platform of any of the preceding clauses, wherein the fraud-susceptibility personality survey comprises a plurality of questions, wherein calculating the fraud-susceptibility behavioral psychology score includes adding a plurality of sub-scores, and wherein different potential responses to each of the plurality of questions are associated with different sub-scores.
7. The computing platform of any of the preceding clauses, wherein the memory stores additional computer-readable instructions that, when executed by the at least one processor, cause the computing platform to: provide, to an enterprise administrator device, a collective fraud-susceptibility behavioral psychology score for a group of users associated with an enterprise organization.
8. The computing platform of clause 7, wherein the memory stores additional computer-readable instructions that, when executed by the at least one processor, cause the computing platform to: provide, to the enterprise administrator device, one or more tailored cybersecurity training recommendation options based on the collective fraud-susceptibility behavioral psychology score.
9. The computing platform of any of the preceding clauses, wherein the memory stores additional computer-readable instructions that, when executed by the at least one processor, cause the computing platform to: prior to generating the dynamically adapted cybersecurity training template, generate a training nudge for the user to complete the one or more customized cybersecurity training modules; and send the training nudge to the enterprise user device.
10. The computing platform of clause 9, wherein generating the training nudge includes customizing one or more aspects of the training nudge using the behavioral psychology training module.
11. The computing platform of any of the preceding clauses, wherein generating the dynamically adapted cybersecurity training template includes selecting and inserting one or more modular cybersecurity training elements maintained by a cybersecurity training library into a cybersecurity training template.
12. The computing platform of any of the preceding clauses, wherein the memory stores additional computer-readable instructions that, when executed by the at least one processor, cause the computing platform to: receive training program results based on user interaction with the one or more customized cybersecurity training modules.
13. The computing platform of clause 12, wherein the memory stores additional computer-readable instructions that, when executed by the at least one processor, cause the computing platform to: update a machine learning model used to generate the dynamically adapted cybersecurity training template based on training program results.
14. A method, comprising: at a computing platform comprising at least one processor, a communication interface, and memory: generating a fraud-susceptibility personality survey; sending, to an enterprise user device, the fraud-susceptibility personality survey; receiving, from the enterprise user device, information indicating how a user of the enterprise user device responded to the fraud-susceptibility personality survey; calculating a fraud-susceptibility behavioral psychology score for the user based on the information; identifying a user-specific predicted failure rate on one or more cybersecurity training modules based on the fraud-susceptibility behavioral psychology score; generating, based on the user-specific predicted failure rate and using a behavioral psychology training module, a dynamically adapted cybersecurity training template; and sending, to the enterprise user device, the dynamically adapted cybersecurity training template, wherein sending the dynamically adapted cybersecurity training template to the enterprise user device causes the enterprise user device to display one or more customized cybersecurity training modules.
15. The method of clause 14, wherein generating the fraud-susceptibility personality survey includes customizing one or more portions of the fraud-susceptibility personality survey based on at least one of: user information or enterprise information.
16. The method of clause 14 or 15, wherein the fraud-susceptibility personality survey includes a general decision-making portion and wherein calculating the fraud-susceptibility behavioral psychology score includes weighting the general decision-making portion more than one or more other portions of the fraud-susceptibility personality survey.
17. The method of clause 16, wherein generating the fraud-susceptibility personality survey includes dynamically adapting one or more portions of the fraud-susceptibility personality survey as the user responds to the general decision-making portion of the fraud-susceptibility personality survey.
18. The method of any of clauses 14-17, wherein the fraud-susceptibility personality survey comprises a plurality of questions, wherein calculating the fraud-susceptibility behavioral psychology score includes adding a plurality of sub-scores, and wherein different potential responses to each of the plurality of questions are associated with different sub-scores.
19. The method of any of clauses 14-18, further comprising: prior to generating the dynamically adapted cybersecurity training template, generating a training nudge for the user to complete the one or more customized cybersecurity training modules; and sending the training nudge to the enterprise user device.
20. One or more non-transitory computer-readable media storing instructions that, when executed by a computing platform comprising at least one processor, a communication interface, and memory, cause the computing platform to: generate a fraud-susceptibility personality survey; send, to an enterprise user device, the fraud-susceptibility personality survey; receive, from the enterprise user device, information indicating how a user of the enterprise user device responded to the fraud-susceptibility personality survey; calculate a fraud-susceptibility behavioral psychology score for the user based on the information; identify a user-specific predicted failure rate on one or more cybersecurity training modules based on the fraud-susceptibility behavioral psychology score; generate, based on the user-specific predicted failure rate and using a behavioral psychology training module, a dynamically adapted cybersecurity training template; and send, to the enterprise user device, the dynamically adapted cybersecurity training template, wherein sending the dynamically adapted cybersecurity training template to the enterprise user device causes the enterprise user device to display one or more customized cybersecurity training modules.

Aspects of the disclosure have been described in terms of illustrative embodiments thereof. Numerous other embodiments, modifications, and variations within the scope of the appended claims will occur to persons of ordinary skill in the art from a review of this disclosure. For example, one or more of the steps depicted in the illustrative figures may be performed in other than the recited order, and one or more depicted steps may be optional in accordance with aspects of the disclosure.

## Claims

1. A computer-implemented method, comprising:
generating (202, 705) a fraud-susceptibility personality survey;
sending (203, 710), to an enterprise user device (120, 130), the fraud-susceptibility personality survey;
receiving (204, 715), from the enterprise user device (120, 130), information indicating how a user of the enterprise user device (120, 130) responded to the fraud-susceptibility personality survey;
calculating (205, 720) a fraud-susceptibility behavioral psychology score for the user based on the information;
identifying (206, 725) a user-specific predicted failure rate on one or more cybersecurity training modules based on the fraud-susceptibility behavioral psychology score;
generating (217, 730), based on the user-specific predicted failure rate and using a behavioral psychology training module (112d), a dynamically adapted cybersecurity training template; and
sending (218, 735), to the enterprise user device (120, 130), the dynamically adapted cybersecurity training template, wherein sending (218, 735) the dynamically adapted cybersecurity training template to the enterprise user device (120, 130) causes the enterprise user device (120, 130) to display (740) one or more customized cybersecurity training modules.

2. The method of claim 1, wherein generating (202, 705) the fraud-susceptibility personality survey includes customizing one or more portions of the fraud-susceptibility personality survey based on at least one of: user information or enterprise information.

3. The method of claim 1 or 2, wherein the fraud-susceptibility personality survey includes a general decision-making portion and wherein calculating (205, 720) the fraud-susceptibility behavioral psychology score includes weighting the general decision-making portion more than one or more other portions of the fraud-susceptibility personality survey.

4. The method of claim 3, wherein generating (202, 705) the fraud-susceptibility personality survey includes dynamically adapting one or more portions of the fraud-susceptibility personality survey as the user responds to the general decision-making portion of the fraud-susceptibility personality survey.

5. The method of any of the preceding claims, wherein sending (203, 710) the fraud-susceptibility personality survey includes generating and sending one or more graphical user interfaces (300) or web portal pages to the enterprise user device (120, 130).

6. The method of any of the preceding claims, wherein the fraud-susceptibility personality survey comprises a plurality of questions, wherein calculating (205, 720) the fraud-susceptibility behavioral psychology score includes adding a plurality of sub-scores, and wherein different potential responses to each of the plurality of questions are associated with different sub-scores.

7. The method of any of the preceding claims, further comprising:
providing (209), to an enterprise administrator device (140), a collective fraud-susceptibility behavioral psychology score for a group of users associated with an enterprise organization.

8. The method of claim 7, further comprising:
providing (209), to the enterprise administrator device (140), one or more tailored cybersecurity training recommendation options based on the collective fraud-susceptibility behavioral psychology score.

9. The method of any of the preceding claims, further comprising:
prior to generating (217, 730) the dynamically adapted cybersecurity training template, generating (213) a training nudge for the user to complete the one or more customized cybersecurity training modules; and
sending (214) the training nudge to the enterprise user device (120, 130).

10. The method of claim 9, wherein generating (213) the training nudge includes customizing one or more aspects of the training nudge using the behavioral psychology training module.

11. The method of any of the preceding claims, wherein generating (217, 730) the dynamically adapted cybersecurity training template includes selecting and inserting one or more modular cybersecurity training elements maintained by a cybersecurity training library into a cybersecurity training template.

12. The method of any of the preceding claims, further comprising:
receiving training program results based on user interaction with the one or more customized cybersecurity training modules; and
updating (221, 745) a machine learning model (112c) used to generate (217, 720) the dynamically adapted cybersecurity training template based on training program results.

13. A data processing apparatus comprising at least one processor (110) configured to perform the method of any of claims 1-12.

14. A computer-readable medium comprising instructions which, when executed by a computer (110), cause the computer (110) to carry out the method of any of claims 1-12.

15. A computer program product comprising instructions which, when the program is executed by a computer (110), cause the computer (110) to carry out the method of any of claims 1-12.
